# EUROPEAN PATENT SPECIFICATION

(11) **EP 1 717 904 B1**
(45) Date of publication and mention of the grant of the patent: **08.12.2010**
(21) Application number: 05028514.7
(22) Date of filing: 27.12.2005
(51) Int. Cl.: H01Q 23/00, H01Q 9/04, H01Q 1/38, H01Q 1/22

(54) **Radio frequency identification tag with improved directivity and coverage distance stability**
Hochfrequenz-Identifikationsetikett mit verbesserter Richtcharakteristik und Stabilität der Strahlungsreichweite
Badge d'identification HF à directivité améliorée et stabilité améliorée de couverture de distance

(30) Priority: 28.04.2005 JP 2005133438
(43) Date of publication of application: 02.11.2006
(73) Proprietor: HITACHI, LTD., Chiyoda-ku Tokyo 100-8280 (JP)
(72) Inventor: Sakama, Isao, c/o Hitachi, Ltd. IP Office, Chiyoda-ku Tokyo 100-8220 (JP); Ashizawa, Minoru, c/o Hitachi, Ltd. IP Office, Chiyoda-ku Tokyo 100-8220 (JP)
(74) Representative: Strehl Schübel-Hopf & Partner

(56) References cited:
- US-A- 6 107 920
- US-B1- 6 281 794
- US-B1- 6 486 783
- US-B1- 6 496 146
- PATENT ABSTRACTS OF JAPAN vol. 1999, no. 14, 22 December 1999 (1999-12-22) -& JP 11 261456 A (HITACHI LTD), 24 September 1999 (1999-09-24)
- PATENT ABSTRACTS OF JAPAN vol. 2003, no. 12, 5 December 2003 (2003-12-05) -& JP 2003 243918 A (DAINIPPON PRINTING CO LTD), 29 August 2003 (2003-08-29)

## Description

### BACKGROUND OF THE INVENTION

This invention relates to a radio frequency IC tag for wireless transmission of information recorded to an IC chip. More particularly, the invention relates to a radio frequency IC tag using an improved antenna for transmitting a radio wave from an IC chip.

A radio frequency IC tag or a radio frequency identification tag (RFID) has gained a wide application in recent years for information management of articles and management of physical distribution. Utilization of these radio frequency IC tags has now started to specify and manage animals. Such a radio frequency IC tag is composed of small IC chip recording information and a small antenna for wireless transmitting the information recorded to the IC chip. A small IC chip having a size of about 0.4 mm width, 0.4 mm depth and 0.1 mm height is fixed to the proximity of the center of a thinly elongated antenna, for example, and can be used while fitted to an animal or an article. When a reader/writer is brought close to the radio frequency IC tag, the information recorded to the IC chip can be read through a non-contact system and the individual article or animal can be managed. To bond the radio frequency IC tag to the article or the animal, the radio frequency IC tag is preferably as small as possible and to this end the size of the antenna of the radio frequency IC tag must be reduced.

### SUMMARY OF THE INVENTION

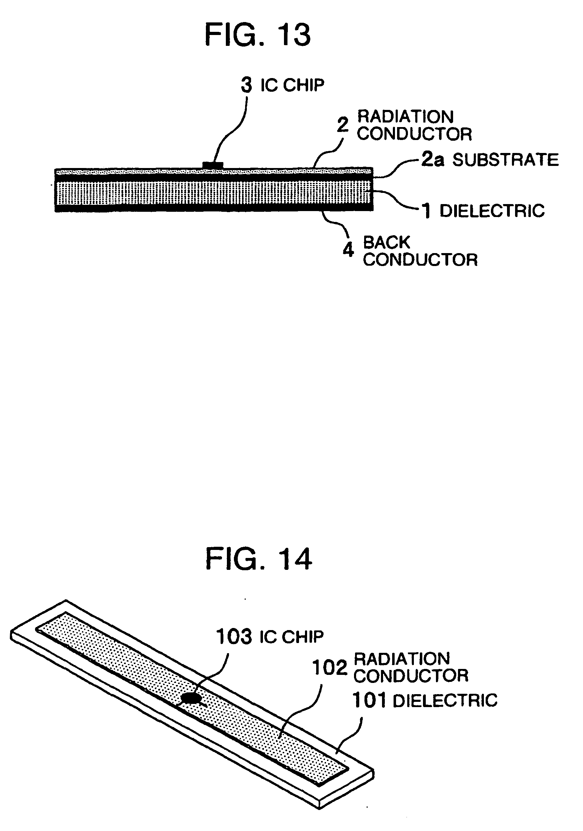

The antenna used for the radio frequency IC tag is mainly a dipole antenna. Fig. 14 is an appearance view of a radio frequency IC tag according to the prior art that uses the dipole antenna. A radiation conductor (antenna) 102 having a length of λ/2 (half wavelength) is arranged on the surface of a dielectric 101 in its longitudinal direction. IC chip 103 recording information is mounted to a substantial center of the radiation conductor 102. However, the coverage distance or communication distance remarkably drops and communication cannot be made in some cases according to the dipole antenna having the construction shown in Fig. 14 when the material of an article to which the radio frequency IC tag is fitted is a metal or a material containing moisture such as a tree, a meat, a living body, a vegetable, and so forth.

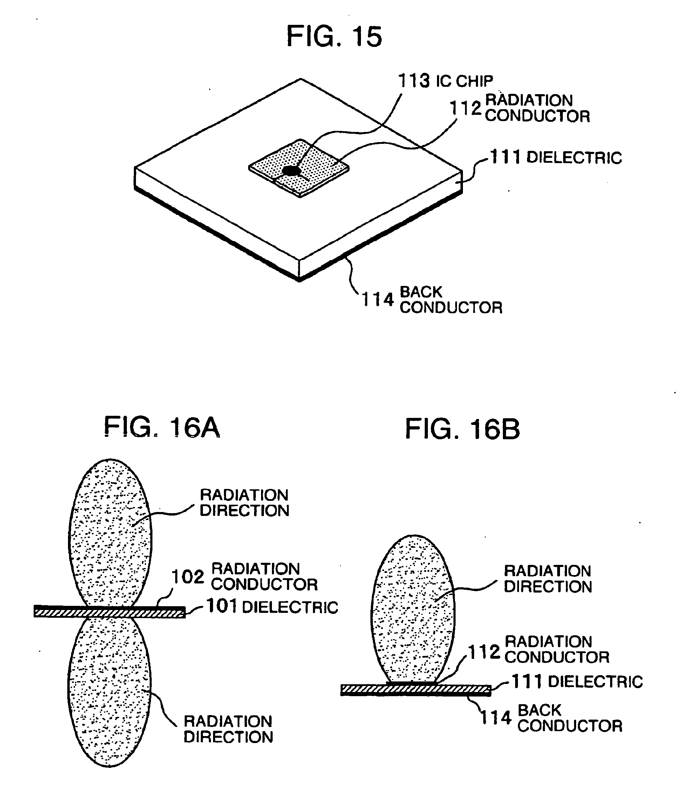

To secure a stable communication distance even when the radio frequency IC tag is fitted to these articles, it is necessary to use an antenna having a construction which includes a radiation electrode and a ground electrode each for radiating radio wave, and a dielectric layer sandwiched between these two electrodes (hereinafter called "micro-strip antenna"). In other words, the micro-strip antenna can acquire stable communication performance without depending on the fitting material (object to which micro-strip antenna is fitted). However, the radio wave radiated from the micro-strip antenna has one-side directivity unlike the dipole antenna. Fig. 15 is an appearance view of a radio wave IC tag according to the prior art that uses the micro-strip antenna. A radiation conductor (antenna) 112 to which an IC chip 113 is mounted is arranged in a surface-center area of a dielectric 111 and a back conductor 114 is arranged as a ground on the entire back surface of the dielectric 111. To allow the back conductor 114 to operate as the ground, the size of the back conductor 114 is preferably as large as possible and the size exceeding twice that of the radiation conductor 112 is required in ordinary use.

Figs. 16A and 16B show radio wave radiation directions of the antennas, respectively. Fig. 16A shows antenna directivity of the dipole antenna shown in Fig. 14 and Fig. 16B shows antenna directivity of the micro-strip antenna shown in Fig. 15. The dipole antenna exhibits the radio wave radiation directions to the front and back surfaces of the radiation conductor 102 (hereinafter called "both-side directivity") as shown in Fig. 16A but the micro-strip antenna exhibits the radio wave radiation direction to only the front surface of the radiation conductor 112 (hereinafter called "one-side directivity") because the back ground conductor 114 exists as the ground as shown in Fig. 16B. In other words, the ground cuts off radiation of the radio wave on the ground side in the micro-strip antenna.

For reference, various reports have been made about micro-strip antennas having an antenna and a ground on the front and back surfaces of a dielectric. For example, refer to US20050110680 (paragraph Nos. 0023 to 0038 and Figs. 2A and 2B) and JP-A-2003-283241 (paragraph Nos. 0009 to 0015 and Figs. 1 and 2). A technology that fits a small radio wave device equipped with a micro-strip antenna to the neck of an animal has been reported, too. Refer to JP-A-7-240696 (paragraph Nos. 0040 to 0042 and Fig. 15), for example.

Though the dipole antenna has the advantage that it has both-side directivity, the antenna gets elongated because its maximum antenna efficiency is exhibited when an antenna length is λ/2 and the radio frequency IC tag eventually becomes large in size. The coverage distance of the radio frequency IC tag drops remarkably when a metal or an article containing moisture exits in the proximity of the antenna portion of the dipole antenna. On the other hand, the metal or the article containing moisture does not affect radiation of the radio wave in the micro-strip antenna owing to the cutoff operation of the ground but the coverage range of the radio frequency IC tag is limited to one direction due to one-side directivity. Therefore, the radiation direction of the radio wave must be strictly discriminated when the information is read by the reader/writer.

The structure of the dielectric to which the micro-strip antenna is mounted is mainly formed of a printed substrate material such as Teflon (registered trade mark) or glass-epoxy. Therefore, the radio frequency IC tag is rigid flat sheet-like and cannot be fitted to a curved article or a soft article. The technologies of US20050110680 and JP-A-2003-283241 described above cannot solve the problem of flexibility, either. Furthermore, though the technology of JP-A-7-240696 solves the problem of flexibility, reading of the information is inconvenient because the antenna is the micro-strip antenna and radiation of the radio wave is limited to one direction.

JP-11-261456 A discloses a radio wave IC tag having the features in the precharacterising first part of claim 1 in common with the present invention. A particular feature of this prior art is that it comprises two micro-strip antennas with a common ground plate electrode and a radiation electrode on either side of the ground plate electrode, to achieve directivity to both sides of the tag. An IC chip is mounted on one of the radiation electrodes and is further connected to the ground plate electrode and, through a through-hole in the ground plate electrode, to the other radiation electrode.

Radio frequency IC tags with antennas having radiating electrodes of different shapes are also disclosed by US 6 281 794 B1. US 6 496 146 B1 discloses a mobile terminal having an antenna with an array of radiating patches.

It is an object of the invention to provide a radio frequency IC tag which avoids narrow directivity, is free from a drop of the communication distance when fixed to an article containing metal or moisture and is robust and rich in flexibility_{.}

This object is solved by a radio wave IC tag as set forth in claim 1.

The radio frequency IC tag according to an embodiment of the invention is a radio frequency IC tag having a construction as set out in independent claim 1 and the dependent claims.

In preferred embodiments of the invention, the shape of the radiation electrode may be a rectangle, a polygon, a circle or an H-shape.

Other objects, features and advantages of the invention will become apparent from the following description of the embodiments of the invention taken in conjunction with the accompanying drawings.

### BRIEF DESCRIPTION OF THE DRAWINGS

Figs. 1A and 1B are a sectional view and a perspective view showing a micro-strip antenna in a radio frequency IC tag according to a first embodiment of the invention, respectively;
Fig. 2 shows antenna directivity of the micro-strip antenna shown in Fig. 1;
Fig. 3 is a conceptual view showing an example where a radio frequency IC tag constituted by the micro-strip antenna shown in Fig. 1 is fitted to a metallic pipe;
Figs. 4A and 4B are a sectional view and a perspective view showing a micro-strip antenna in a radio frequency IC tag according to a second embodiment of the invention, respectively;
Figs. 5A, 5B, 5C and 5D are structural views of round radio frequency IC tags according to Comparative Example and to a third embodiment of the invention, and are a sectional view of the radio frequency IC tag of Comparative Example, a perspective view of the radio frequency IC tag of Comparative Example, a sectional view of the radio frequency IC tag of the third embodiment and a perspective view of the radio frequency IC tag of the third embodiment, respectively;
Fig. 6 shows a micro-strip antenna of a radio frequency IC tag according to a fourth embodiment of the invention;
Fig. 7 shows a micro-strip antenna of a radio frequency IC tag according to a fifth embodiment of the invention;
Fig. 8 shows a micro-strip antenna of a radio frequency IC tag according to a sixth embodiment of the invention;
Figs. 9A and 9B are a perspective view and a sectional view of a micro-strip antenna of a radio frequency IC tag according to a seventh embodiment of the invention, respectively;
Figs. 10A and 10B are a perspective view and a sectional view of a micro-strip antenna of a radio frequency IC tag according to an eighth embodiment of the invention, respectively;
Fig. 11 is a graph showing the relation between the change of a diameter of a back surface ground electrode and a communication distance when a radiation electrode having a diameter of 25 mm is used;
Fig. 12 is a graph showing the relation between a foaming ratio of synthetic resin foam and a dielectric constant;
Fig. 13 is an explanatory view for explaining production of a radio frequency IC tag;
Fig. 14 is an appearance view of a radio frequency IC tag using a dipole antenna according to the prior art;
Fig. 15 is an appearance view of a radio frequency IC tag using a micro-strip antenna according to the prior art; and
Figs. 16A and 16B are explanatory views for explaining radio wave radiation directions of antennas, wherein Fig. 16A shows antenna directivity of the dipole antenna shown in Fig. 14 and Fig. 16B shows antenna directivity of the micro-strip antenna shown in Fig. 15.

### DESCRIPTION OF THE EMBODIMENTS

Radio frequency IC tags according to the presently preferred embodiments of the invention will be explained with reference to the accompanying drawings. Incidentally, like reference numerals will be used to identify like elements.

The radio frequency IC tag according to the embodiments, though a micro-strip antenna, accomplishes wide directivity equivalent to that of a dipole antenna by using a micro-strip antenna including a conductor arranged on both surfaces of a dielectric, using sheet-like foam as the dielectric to provide flexibility and appropriately designing the shape and size of the conductor as a ground.

More specifically, a radio wave radiation portion of the micro-strip antenna and a conductor shape of a ground electrode portion are rectangular, polygonal, round or H-shaped and a mounting position of the IC chip exists on the front surface of the radio wave radiation portion. The size of the ground electrode portion is equal to that of the radio wave radiation portion or not greater than two times the size of the radio wave radiation portion.

The sheet-like dielectric arranged between the electrodes of the micro-strip antenna uses synthetic resin foam to provide flexibility to the entire IC tag.

### First embodiment:

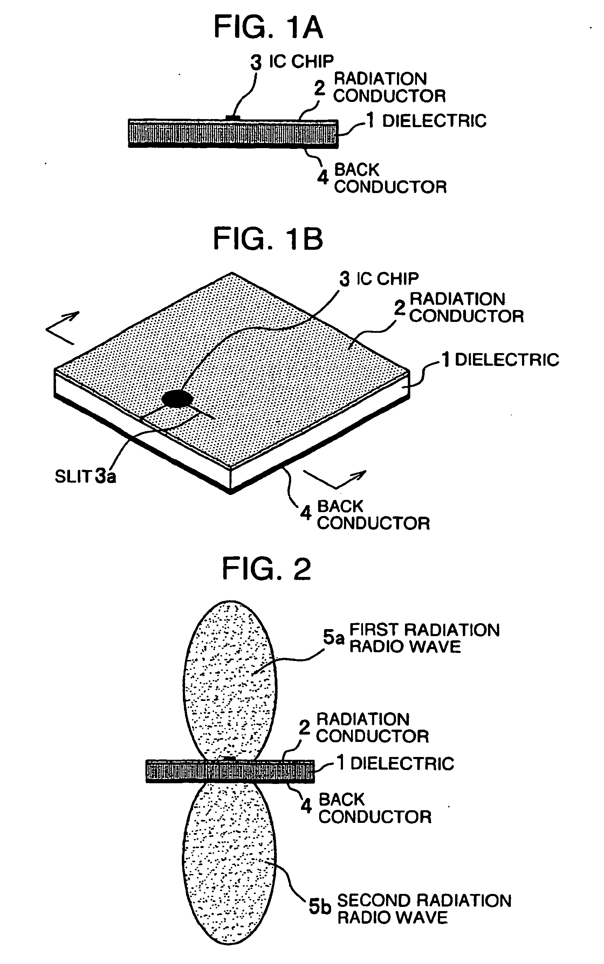

Figs. 1A and 1B show a micro-strip antenna of a radio wave IC tag according to the first embodiment of the invention. Fig. 1A is a sectional view and Fig. 1B is a perspective view. A radiation conductor 2 is formed on the entire front surface of a dielectric 1 and a back conductor 4 is formed on the entire back surface of the dielectric 1. An IC chip 3 is mounted to a position deviated from the center of the radiation conductor 2 on the front surface side. An L-shaped slit 3a is formed at the portion of the radiation conductor 2 at which the IC chip 3 is mounted. One of the ends of the slit 3a extends to one of the ends of the radiation conductor 2 as shown in the drawing. Each bonding pad (not shown in the drawing) of the IC chip 3 is connected to the radiation conductor 2 on both sides of the slit 3a in such a fashion as to bridging the slit 3a. This slit 3a is formed to prevent dielectric breakdown and to establish impedance matching.

The dielectric 1 sandwiched between both electrodes of the radiation conductor 2 and the back conductor 4 constituting the micro-strip antenna uses synthetic resin foam such as acryl type, synthetic rubber type, polyethylene type or their composite type and provides flexibility to the IC tag as a whole. The dielectric constant of this foam tends to decrease with the increase of the foaming ratio. Therefore, when the foam is used and its foaming ratio is controlled, a desired dielectric constant can be controlled by using the same material. To provide flexibility, materials other the foam can be used and the same effect can be acquired. When the fitting surface of an object is planar and flexibility need not be imparted, the foaming ratio of the dielectric 1 may be set to 0% or a printed substrate material such as paper-epoxy, glass-epoxy, Teflon (registered trade mark) or ceramic can be used for the dielectric 1. Furthermore, the dielectric 1 can be materialized by forming an air layer.

The conductor shape of the radiation conductor 2 and the back conductor 4 of the micro-strip antenna shown in Figs. 1A and 1B is rectangular but may be polygonal or round. The radiation conductor 2 and the back conductor 4 may have the same size as shown in the drawing or the size of the back conductor 4 may be not greater than two times the size of the radiation conductor 2. Furthermore, the mounting position of the IC chip 3 may be the center of the radiation conductor 2. Each of the radiation conductor 2 and the back conductor 4 may be formed by bonding a metal foil or may be formed of a vacuum deposition thin film of a metal such as aluminum through a thin film resin such as PET, PE or polyimide. The fitting surface of the IC chip 3 may be directly arranged on the dielectric surface. Here, it is only necessary that both radiation conductor 2 and back conductor 4 can undergo deformation integrally with the dielectric 1.

The micro-strip antenna according to the prior art is mounted to a printed substrate used for electronic devices and apparatuses using glass-epoxy or Teflon (registered trade mark) as a main structure and does not have flexibility when implemented in a radio frequency IC tag. Therefore, it has been difficult to fit the radio frequency IC tag 3 to articles having a curve shape or to a living body such as animals. In contrast, because the IC chip according to the embodiment has flexibility as a whole, it can be easily fitted to such components.

In the micro-strip antenna according to the prior art, the radiation surface of the radio wave and the ground electrode on the back are arranged parallel to each other while sandwiching the dielectric between them and the radio wave radiation surface has an area smaller than that of the ground electrode on the back. In other words, in the construction of the micro-strip antenna according to the prior art, the electric field from the antenna is excited between the radio wave radiation surface and the ground electrode on the back. In consequence, sneaking or travelling of the radio wave from the radiation surface to the ground electrode on the back becomes greater as the area of the ground electrode on the back becomes smaller than the area of the radio wave radiation surface, and radiation of the radio wave from the ground electrode on the back becomes greater.

Therefore, the radio wave intensity radiated from both electrodes can be made equal to each other when the area of the radio wave radiation surface (that is, radiation conductor 2) is equal to the area of the ground electrode on the back (that is, back conductor 4) as shown in Figs. 1A and 1B. When the area of the ground electrode (back conductor 4) is made smaller than that of the micro-strip antenna of the prior art, however, the influences of the fitting article of the radio wave IC tag become greater but can be drastically reduced in comparison with the dipole antenna. For this reason, in the radio wave IC tag according to this embodiment, the area of the radio wave radiation surface (radiation conductor 2) and the area of the ground electrode on the back (back conductor 4) are made equal to each other to reduce the influences from the fitting article of the micro-strip antenna and to acquire wide radiation characteristics equivalent to those of the dipole antenna.

Fig. 2 shows antenna directivity of the micro-strip antenna shown in Figs. 1A and 1B. Because the radiation conductor 2 and the back conductor 4 have substantially the same area in the micro-strip antenna shown in Figs. 1A and 1B, the first radiation radio wave 5a radiated from the radiation conductor 2 and the second radiation radio wave 5b radiated from the back conductor 4 have substantially the same radio wave intensity. In other words, the micro-strip antenna that is shown in Figs. 1A and 1B has both-side directivity substantially similar to that of the dipole antenna. According to experimental results, information in the IC chip 3 can be read by a reader/writer from distances of about 7 to about 8 cm from both surface sides in the radio frequency IC tag constituted by the micro-strip antenna shown in Figs. 1A and 1B.

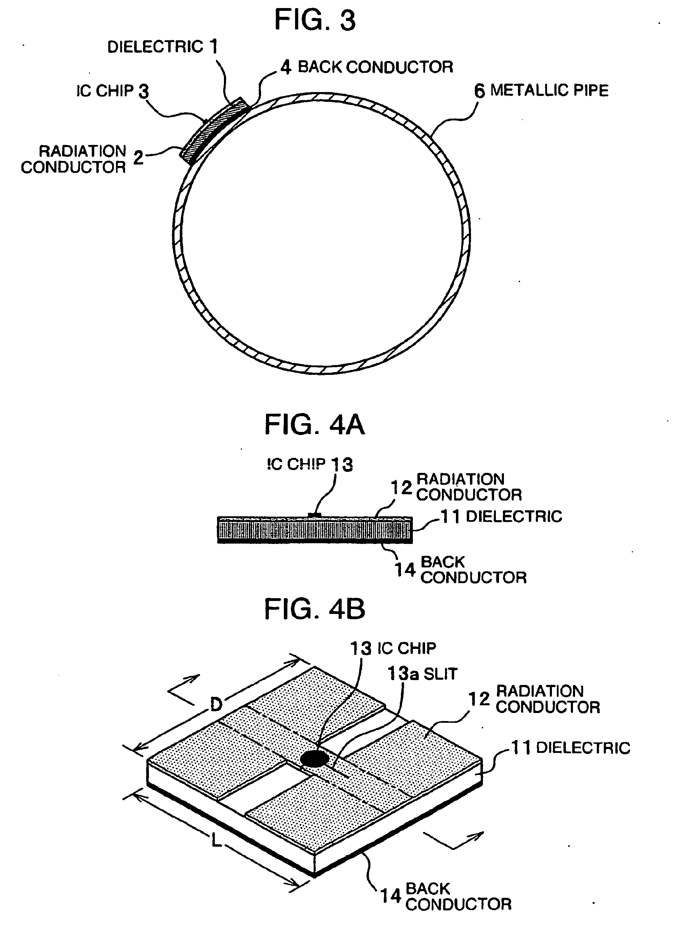

Fig. 3 is a conceptual view showing an example when the radio frequency IC tag constituted by the micro-strip antenna is fitted to a metallic pipe. The radio frequency IC tag can be fitted in its entirety to the metallic pipe 6 because it is rich in flexibility as a whole as described above. In other words, each of the back conductor 4, the dielectric 1 and the radiation conductor 2 can be fitted to the metallic pipe 6 along its curve surface without peel. Since the back conductor 4 keeps contact with the metallic pipe 6 in the case of Fig. 3, the direction of the radiation radio wave is only the direction of the front surface side of the radiation conductor 2 but the attributes of the metallic pipe 6 and its specification can be read by bringing the reader/writer close to the radiation conductor 2. Incidentally, in the case of a vinyl chloride pipe in place of the metallic pipe 6, the radio wave is radiated to the inside of the pipe, too, and the attributes of the vinyl chloride pipe and its specification can be read by the reader/writer from the inside of the pipe.

Though not specifically shown in the drawing, the radio wave IC tag according to the embodiment can manage the information of livestock when fitted to ears of pig, cow, goat, etc. The radio wave IC tag can also be fitted to the neck of giraffe or the ears of elephant in zoos. In other words, even when fitted to water-containing articles such as trees, meat, living bodies, vegetable, etc, the radio wave IC tag can be fitted while keeping high compatibility with the shape of the fitting portion and its communication distance is in no way lowered by the influences of the moisture contained in such articles. Moreover, because the micro-strip antenna constituted by the wireless IC tag of this embodiment has both-side directivity, the reader/writer can read the information of the radio wave IC tag within a relatively wide range even when the livestock move.

### Second embodiment:

Figs. 4A and 4B show a micro-strip antenna of a radio wave IC tag according to the second embodiment of the invention. Fig. 4A is a sectional view and Fig. 4B is a perspective view. An H-shaped radiation conductor 12 is formed on the entire surface of a dielectric 11 and a back conductor 14 is formed on the entire back surface of the dielectric 11. An IC chip 13 is mounted to a contraction (narrowed) portion of the H-shaped radiation conductor 12 on the front surface side. Incidentally, an L-shaped slit 13a is formed at the contraction portion of the radiation conductor 12 to which the IC chip 13 is mounted. The slit 13a is for preventing dielectric breakdown and for establishing impedance matching in the same way as in the first embodiment.

The H-shaped radiation conductor 12 formed on the front surface of the dielectric 11 operates as a micro-strip antenna in cooperation with the back conductor 14 that is formed on the entire back surface of the dielectric 11. Since the IC chip 13 is mounted to the contraction portion, the contraction portion operates as a power feed portion for causing the antenna current to flow and both side portions (peripheral portions) operate as the radiation portions for irradiating the antenna radio wave.

In contrast to a transversely elongated antenna as a Comparative Example indicated by dash-dot-chain line, this H-shaped antenna has a shape widening on both sides in such a fashion as to form the contraction portion at the center, the maximum current can be obtained at the contract portion of the H-shaped antenna at which the IC chip 13 is connected to the radiation conductor 12 and electromagnetic energy concentrates on the peripheral portions of the radiation conductor 12 surrounding the IC chip 13. Therefore, when the antenna width D of the H-shaped antenna formed of the radiation conductor 12 is set to a predetermined value, antenna efficiency rises and the communication distance increases even when the length L is decreased. In other words, both antenna efficiency and communication distance can be improved because the IC chip 13 is mounted to the center portion of the antenna on which electromagnetic energy most concentrates.

The dielectric 11 uses the synthetic resin foam in the same way as the first embodiment shown in Figs. 1A and 1B to secure flexibility. As for directivity of the radio wave, the antenna has both-side directivity in the same way as the first embodiment shown in Fig. 2. Therefore, the radio wave IC tag can be fitted to the pipe or the livestock in the same way as the first embodiment and can accomplish wide directivity.

### Third embodiment:

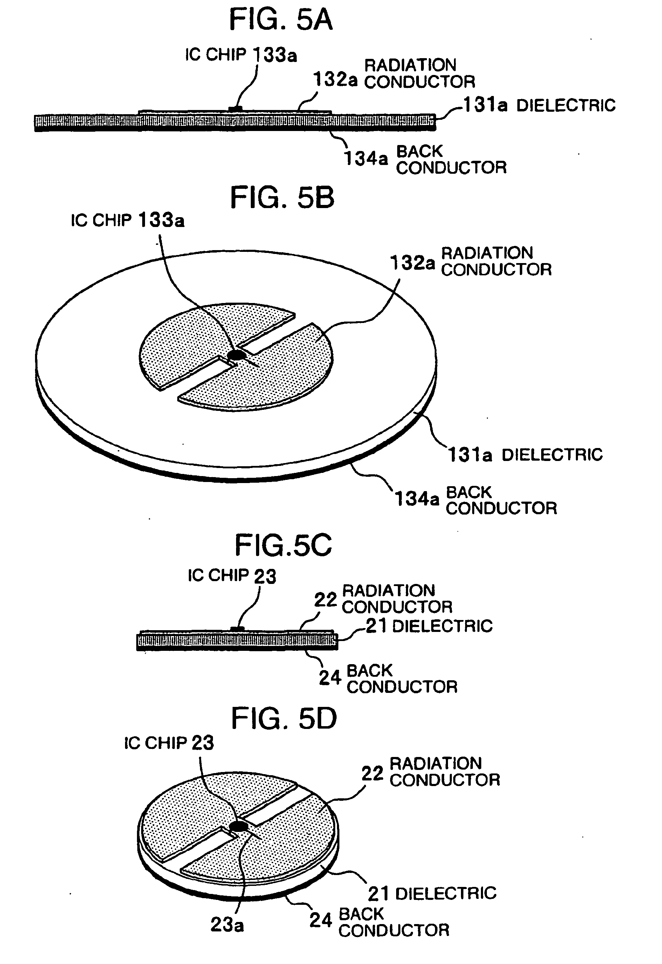

A round IC tag will be explained in the third embodiment. To have the explanation more easily understood, the round radio wave IC tag of the third embodiment will be explained in comparison with a radio wave IC tag of the Comparative Example. Figs. 5A to 5D are structural views of round radio frequency IC tags according to Comparative Example and to the third embodiment of the invention, wherein Fig. 5A is a sectional view of the radio frequency IC tag of Comparative Example, Fig. 5B is a perspective view of the radio frequency IC tag of Comparative Example, Fig. 5C is a sectional view of the radio frequency IC tag of the third embodiment and Fig. 5D is a perspective view of the radio frequency IC tag of the third embodiment, respectively.

To let the radio frequency IC tag of Comparative Example operate as the micro-strip antenna, a round H-shaped radiation conductor 132a is formed at the center of a disk-like dielectric 131a having a large area as shown in Figs. 5A and 5B. An IC chip 133a is mounted to a contraction portion at the center of the round H-shaped radiation conductor 132a. Furthermore, a back conductor 134a is formed on the entire area of the back of the dielectric 131a. In this way, the radiation radio wave on the side of the surface radiation conductor 132a is prevented from traveling to the back. Incidentally, since the radiation characteristics of the round H-shaped radiation conductor 132a are the same as those of the H-shaped antenna explained in the second embodiment, its explanation will be omitted.

The construction of the radio wave IC tag of Comparative Example shown in Figs. 5A and 5B becomes great in size and cannot be fitted easily to the ear of the livestock because the disk-like dielectric 131a is great. Therefore, in the round radio wave IC tag according to the third embodiment, the round H-shaped radiation conductor 22 is formed on the entire front surface area of the dielectric 21 and the back conductor 24 is formed on the entire area of the back of the dielectric 21 as shown in Figs. 5C and 5D. The IC chip 23 is mounted to the H-shaped contraction portion of the radiation conductor 22 on the surface side. The continuous L-shaped slit 23a is formed at the mounting position of the IC chip 23 in the same way as in the foregoing embodiments. In other words, the round area of the radiation conductor 22 is made substantially equal to the area of the back conductor 24 and the radiation radio wave on the surface side of the radiation conductor 22 can travel to the back. In consequence, the radio wave is radiated from both sides. The round area of the dielectric 21 can be decreased because the back conductor 24 is small in size as compared to the Comparative Example of Figs. 5A and 5B and eventually, the radio wave IC tag can be rendered small in size. Moreover, the radio frequency IC tag can be easily fitted to the ears of the livestock since the dielectric 21 is made of a flexible synthetic resin foam.

### Fourth embodiment:

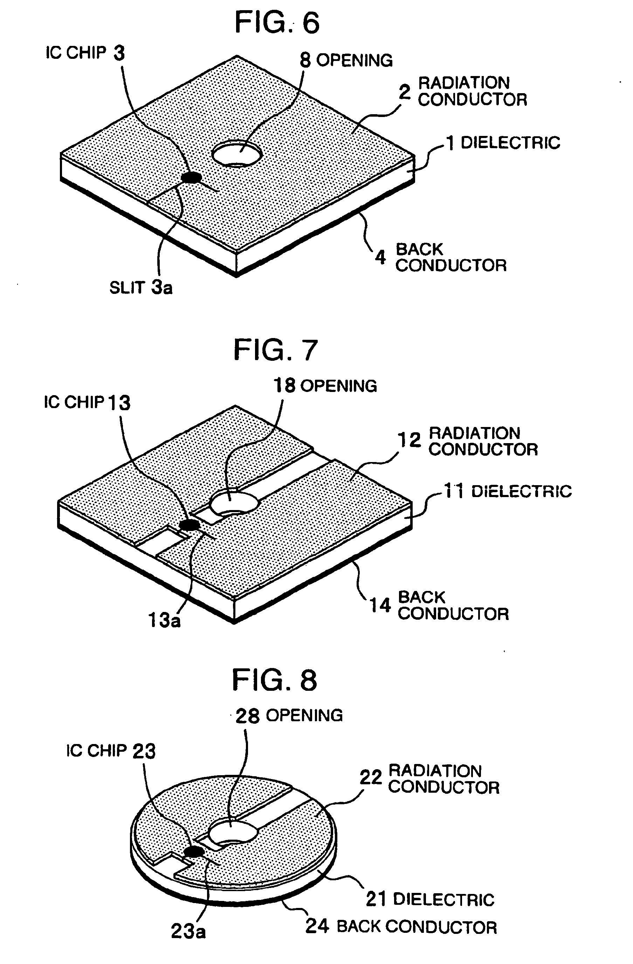

Fig. 6 shows a micro-strip antenna in a radio frequency IC tag according to the fourth embodiment of the invention. In the micro-strip antenna of the fourth embodiment shown in Fig. 6, a through-opening 8 is formed in the micro-strip of the first embodiment shown in Fig. 1. Because the through-opening 8 is formed, it is possible to insert a bolt and to fit and fix the radio frequency IC tag to the ear of the livestock or other articles. To avoid this through-opening 8, the IC chip 3 is mounted to a position deviated from the center. A continuous L-shaped slit 3a is formed at the mounting position of the IC chip 3 in the same way as in the embodiment described above. Because the through-opening 8 is disposed, the areas of the radiation conductor 2 and back conductor 4 somewhat decrease but both-side directivity of the radio wave can be maintained. Incidentally, the position of the through-opening 8 can be arbitrarily changed in accordance with the article to which the radio frequency IC tag is to be fitted.

### Fifth embodiment:

Fig. 7 shows a micro-strip antenna in a radio frequency IC tag according to the fifth embodiment of the invention. In the micro-strip antenna of the fifth embodiment shown in Fig. 7, a through-opening 18 penetrating at the center is formed in the micro-strip antenna of the second embodiment shown in Figs. 4A and 4B. A contraction portion to which an IC chip 13 is to be mounted is set to a position deviated from the center. An L-shaped slit 13a is formed at the mounting position of the IC chip 3 in the same way as in the embodiment described above.

Because the through-opening 18 is provided, it is possible to insert a bolt and to fit and fix the radio frequency IC tag to the ear of the livestock or other articles. Because the through-opening 18 is provided, the areas of the radiation conductor 2 and back conductor 4 somewhat decreases but both-side directivity of the radio wave can be maintained. Incidentally, the position of the through-opening 18 can be arbitrarily changed with the exception of the H-shaped contraction portion in accordance with the article to which the radio frequency IC tag is to be fitted.

### Sixth embodiment:

Fig. 8 shows a micro-strip antenna in a radio frequency IC tag according to the sixth embodiment of the invention. In the micro-strip antenna of the sixth embodiment shown in Fig. 8, a through-opening 28 penetrating at the center is formed in the micro-strip antenna of the third embodiment shown in Fig. 5D. A contraction portion to which an IC chip 13 is to be mounted is set to a position deviated from the center. An L-shaped slit 23a is formed at the mounting position of the IC chip 3 in the same way as in the embodiment described above.

Because the through-opening 28 is provided, it is possible to insert a bolt and to fit and fix the radio frequency IC tag to the ear of the livestock or other articles. Because the through-opening 28 is provided, the areas of the radiation conductor 22 and back conductor 24 somewhat decrease but both-side directivity of the radio wave can be maintained. Incidentally, the position of the through-opening 28 can be arbitrarily changed with the exception of the round H-shaped contraction portion in accordance with the article to which the radio frequency IC tag is to be fitted.

### Seventh embodiment:

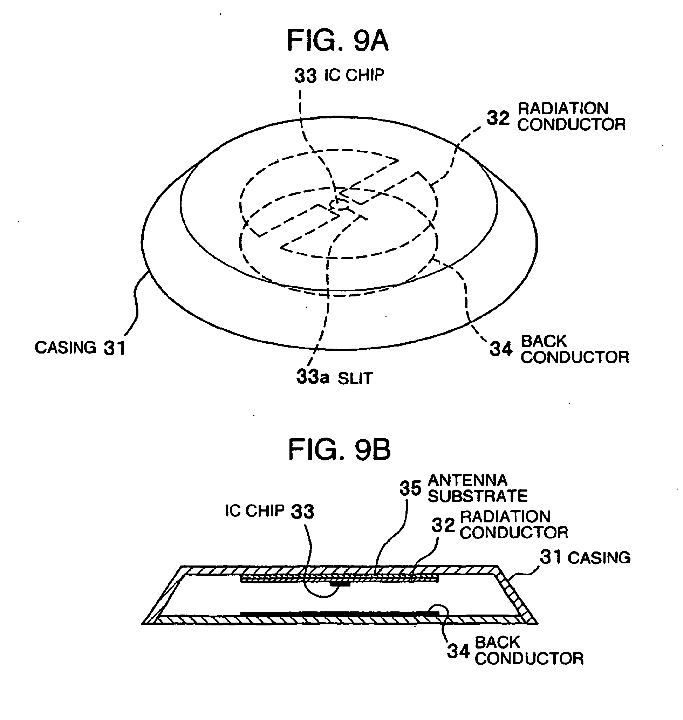

Figs. 9A and 9B show a micro-strip antenna in a radio frequency IC tag according to the seventh embodiment of the invention, wherein Fig. 9A is a perspective view and Fig. 9B is a sectional view. The micro-strip antenna according to the seventh embodiment does not use the substrate-like conductor represented in the foregoing embodiments but an air layer is formed between a radiation conductor 32 and a back conductor 34 and is used as a dielectric. In other words, a back conductor 34 is bonded to the bottom of a trapezoidal cylindrical casing 31 having a lid and the bottom, and an antenna substrate 35 and a radiation conductor 32 as a radiation electrode are bonded in this order to the back of the lid as shown in Figs. 9A and 9B.

The casing 31 and the antenna substrate 35 are fixed by using an adhesive or an adhesive having a resin support.

The shape of the radiation conductor 32 is a round H-shape as shown in a perspective view of Fig. 9A. A slit 33a is formed at a contraction portion of the radiation conductor 32 and an IC chip 33 is mounted. The back conductor 34 bonded to the bottom surface has a round shape having the same diameter as that of the radiation conductor 32 but the slit is not formed. Air can be used as the dielectric by constituting the radio frequency IC tag as shown in Figs. 9A and 9B.

### Eighth embodiment:

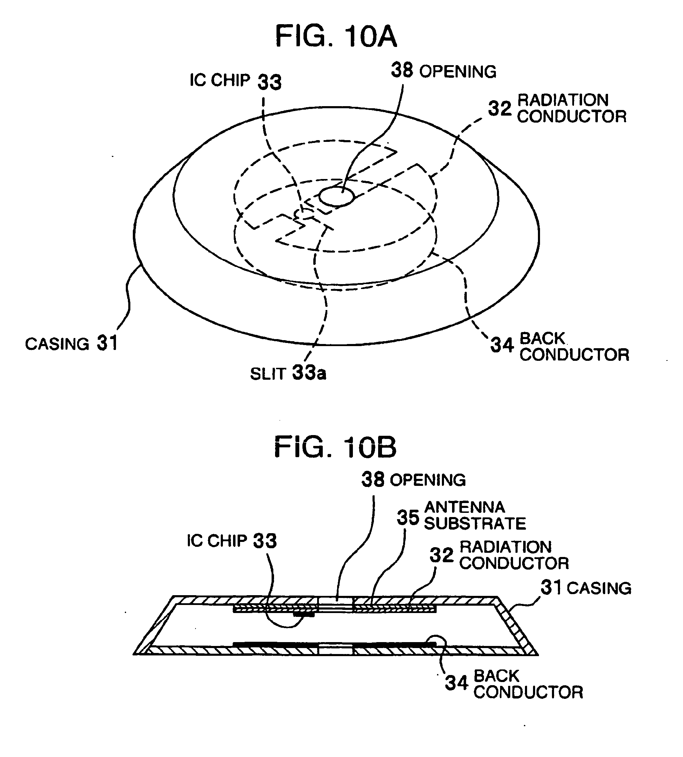

Figs. 10A and 10B show a micro-strip antenna in a radio frequency IC tag according to the eighth embodiment of the invention, wherein Fig. 10A is a perspective view and Fig. 10B is a sectional view. The micro-strip antenna of the eighth embodiment shown in Figs. 10A and 10B includes a penetrating through-opening 38 that is formed in the micro-strip of the seventh embodiment shown in Figs. 9A and 9B. Because the through-opening 38 is provided, it is possible to insert a bolt and to fit and fix the radio frequency IC tag to the ear of the livestock or other articles. Because the through-opening 38 is provided, the areas of the radiation conductor 32 and back conductor 34 somewhat decrease but both-side directivity of the radio wave can be maintained. Incidentally, the position of the through-opening 38 can be arbitrarily changed with the exception of the round H-shaped contraction portion in accordance with the article to which the radio frequency IC tag is to be fitted.

### Experimental results:

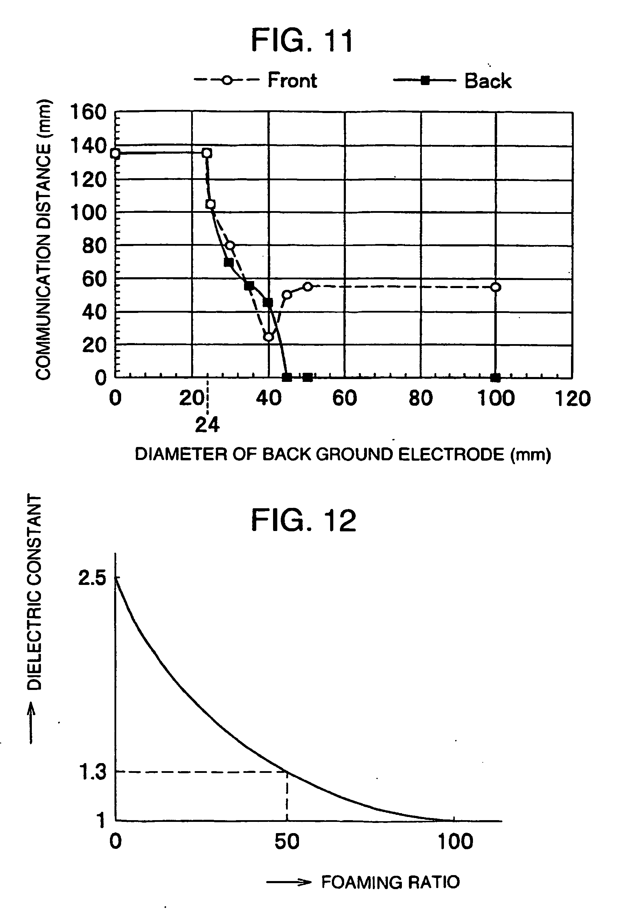

Next, experimental results representing excellent both-side directivity of the radio wave radiated from the antenna by the radio frequency IC tag using the micro-strip antenna according to the invention will be explained. Fig. 11 is a graph showing the relation between the change of the diameter of the back ground electrode and the communication distance when a radiation electrode having a diameter of 25 mm is employed. The abscissa represents the diameter (mm) of the back ground electrode and the ordinate does the coverage distance (mm).

In other words, the graph of Fig. 11 shows the changes of the coverage distances by the radiation radio wave of the surface electrode (radiation conductor 132a) and the back ground electrode (back conductor 134) when the diameter of the surface electrode (that is, radiation conductor 132a)is fixed to 24 mm and the diameter of the back ground electrode (that is, back conductor 134a) is changed with the diameter of the dielectric 131 also being changed by using the round radio wave IC tag shown in Fig. 5B.

When the diameter of the surface electrode (radiation conductor 132) is 24 mm and when the diameter of the back ground electrode (back conductor 134) is greater than 45 mm that is about twice the diameter of the surface electrode, the radio wave is not at all radiated from the back ground electrode (back conductor 134) and all the radio waves are radiated from the surface electrode (radiation conductor 132). Therefore, when the diameter of the back ground electrode (back conductor 134) is greater than twice the diameter of the surface electrode, the communication distance is zero on the side of the back ground electrode (back conductor 134) and the communication distance of the surface electrode (radiation conductor 132) remains constant at 55 mm.

When the diameter of the back ground electrode (back conductor 134) is twice the diameter of the surface electrode or less, however, radiation of the radio wave starts occurring from the back ground electrode (back conductor 134) and the radiation intensity of the radio wave from the back ground electrode (back conductor 134) increases with the decrease of its diameter. In other words, when the diameter of the back ground electrode (back conductor 134) is twice the diameter of the surface electrode or less, the radio wave of the surface electrode (radiation conductor 132) travels to the back. In consequence, the radiation intensity of the radio wave of the back ground electrode (back conductor 134) rises while the radiation intensity of the radio wave of the surface electrode (radiation conductor 132) drops. For this reason, the communication distance of the surface electrode (radiation conductor 132) becomes gradually shorter whereas the communication distance of the back ground electrode (back conductor 134) becomes gradually longer.

On the other hand, when the diameter of the back ground electrode (back conductor 134) is smaller than 40 mm, the radiation intensities of both surface electrode (radiation conductor 132) and back ground electrode (back conductor 134) rise. That is, the communication distances of both surface electrode (radiation conductor 132) and back ground electrode (back conductor 134) become longer. When the diameter of the back ground electrode (back conductor 134) is equal to the diameter, 24 mm, of the surface electrode (radiation conductor 132), the radiation distances of the radio wave of both surface electrode (radiation conductor 132) and back ground electrode (back conductor 134) reach the maximum. In other words, when the diameter of the back ground electrode (back conductor 134) is equal to the diameter of the surface electrode (radiation conductor 132), the communication distances of both surface electrode (radiation conductor 132) and back ground electrode (back conductor 134) reach 135 mm as the maximum coverage distance.

In other words, both-side directivity can be accomplished and the radio wave having the same intensity can be radiated from both-side directions by arranging the circular area of the radiation conductor 22 to be equal to the area of the back conductor 24 as shown in Fig. 5D. As a result, a radio wave IC tag having a long communication distance and wide directivity can be accomplished.

Fig. 12 is a graph showing the relation between the foaming ratio of the synthetic resin foam and the dielectric constant. The abscissa represents the foaming ratio and the ordinate does the dielectric constant. It can be understood from Fig. 12 that the dielectric constant approaches the dielectric constant inherent to the synthetic resin as the foaming ratio drops (that is, the proportion of air contained in the synthetic resin decreases). Therefore, a desired dielectric constant can be acquired by changing the foaming ratio of the synthetic resin used for the micro-strip antenna. When it is desired to use a dielectric constant of 1.3, for example, the foaming ratio of the synthetic resin is set to 50%.

To produce the radio frequency IC tag having the construction shown in Figs. 1A and 1B, for example, a method involving the steps of sandwiching or interposing the substrate 2a between the radiation conductor 2 and the dielectric 1, and bonding a unitary assembly of the IC chip 3, the radiation conductor 2 and the substrate 2a as an inlet to the dielectric 1 of the foam type. In this case, when a 0.03 to 0.5 mm-thick flexible resin such as PET, PEN or polyimide is used for the substrate 2a, its flexibility is not lost. Incidentally, the dielectric 1 may be set to a range of 0.3 to 2.0 mm, for example. When the thickness of the dielectric 1 exceeds this range depending on the characteristics of the antenna, the foaming ratio of the foam, when the dielectric is formed of the foam, may be adjusted so as to achieve this range.

Having wide directivity and excellent flexibility, the radio wave IC tag according to the embodiment can be fitted to the livestock, etc, to manage their attributes and can be utilized in various fields such as traffic systems, building management systems, amusement facilities and medical fields. In the medical field, for example, a wrist band having a bar code has presently been put to the arm or foot of a patient to prevent mix-up of patients. To read the bar code, however, it is necessary to awaken the patient who is sleeping under a coverlet. When the radio wave IC tag of this embodiment is fitted, however, the attributes of the patient and the history of treatment can be read without awakening the patient because the radio wave passes through the coverlet. The radio wave IC tag of the embodiment can be used to confirm whether or not a correct drip pack is given to the patient, hence, contributes to modernization of the clinical field through IT technology.

When the radio wave IC tag recording the history of treatment in other hospitals, the blood type, the allergic constitution, etc, of the patient is read, the information necessary for the medical treatment can be quickly transmitted to the doctors in charge and the patient can receive a suitable treatment. In addition, accuracy of patient identification can be further improved by fitting the wrist band having the radio wave IC tag to the patient and medical mistake can be prevented. The radio wave IC tag of this embodiment can be utilized for patients' chart management for tracing the medical charts and for tracing of medicines for which reliable management is necessary. Reliability of the medical treatment can thus be improved further by making the most of the radio wave IC tag in the hospitals.

As described above, the antenna used for the transmission of the IC chip according to the embodiments does not shorten the communication distance even when it is used for articles containing metals and the moisture content because it is the micro-strip antenna.

The size of the ground electrode on the back side of the micro-strip antenna is optimized to the same size as that of the radiation electrode. Therefore, radiation of the radio waves is made not only from the radiation electrode but a part of the radio waves travels towards the ground electrode on the back surface and can be radiated from the ground electrode. As a result, the radio waves can be radiated in both directions of the front and back surfaces and the wide communication range equivalent to that of the dipole antenna can be secured though the antenna is the micro-strip antenna.

The radio wave IC tag having flexibility can be formed by using a material having flexibility such as the foam for the dielectric material of the micro-strip antenna. Therefore, the radio wave IC tag can be used while fitted to a round metallic pipe and living bodies such as livestock and pets.

It should be further understood by those skilled in the art that although the foregoing description has been made on embodiments of the invention, the invention is not limited thereto and various changes and modifications may be made without departing from the spirit of the invention and the scope of the appended claims.

## Claims

1. A radio wave IC tag equipped with a micro-strip antenna including a radiation electrode (2, 12, 22, 32, 132a) to which an IC chip (3, 13, 23, 133a) is mounted, a ground electrode (4, 14, 24, 34, 134a) and a dielectric (1, 11, 21, 131a) interposed between said radiation electrode and said ground electrode,
**characterised in that**
the radiation electrode has an L-shaped slit (3a), one end of which extends to one end of the radiation electrode, the IC chip bridging the slit and each terminal of the IC chip being connected to the radiation electrode on either side of the slit, and
the dielectric is a flexible dielectric.

2. The IC tag of claim 1,
wherein said antenna has both-side directivety.

3. The IC tag of claim 1,
wherein said radiation electrode and said ground electrode have substantially the same size.

4. The IC tag of claim 1,
wherein the size of said ground electrode is no greater than twice the size of said radiation electrode.

5. The IC tag of any preceding claim, wherein said dielectric is synthetic resin foam.

6. The IC tag of claim 5, wherein said synthetic resin foam is any of acryl, synthetic rubber and polyethylene, or their composite body.

7. The IC tag of claim 6, wherein a foaming ratio of said synthetic resin foam is zero.

8. The IC tag of claim 5, wherein the shape of said synthetic resin foam is a rectangle, a polygon or a circle.

9. The IC tag of claim 8, wherein said dielectric includes a thin film resin, and said radiation electrode and said ground electrode are shaped into a thin film by metal vacuum deposition through said thin film resin.

10. The IC tag of any of claims 1 to 4, wherein said dielectric is paper.

11. The IC tag of any of claims 1 to 4, further comprising a casing (31) having therein a cavity, and wherein said radiation electrode and said ground electrode are arranged on the lid and the bottom of said casing, respectively, and said dielectric is materialized by air between said radiation electrode and said ground electrode.

12. The IC tag of claim 11, wherein said radiation electrode has
a power feed portion to which said IC chip is mounted and
radiation portions existing on both sides of said power feed portion, and said radiation electrode has generally an H-shape that is contracted at said power feed portion and expands at said radiation portions.

13. The IC tag of claim 12, wherein an opening is formed in said radiation electrode, said ground electrode and said dielectric in such a manner as to penetrate through them.

14. The IC tag of claim 11, wherein said radiation electrode has a power feed portion to which said IC chip is mounted and radiation portions existing on both sides of said power feed portion, said radiation electrode is contracted at said power feed portion, said radiation portions are shaped into a semi-circle, respectively, and said power feed portion and said radiation portions form a circle.

## Patentansprüche

1. Hochfrequenz-IC-Tag mit einer Mikrostreifenantenne, die eine mit einem IC-Chip (3, 13, 23, 133a) verbundene Strahlungselektrode (2, 12, 22, 32, 132a), eine Masseelektrode (4, 14, 24, 34, 134a) und ein zwischen der Strahlungselektrode und der Masseelektrode eingefügtes Dielektrikum (1, 11, 21, 131a) aufweist,
**dadurch gekennzeichnet, dass**
die Strahlungselektrode einen L-förmigen Schlitz (3a) aufweist, dessen eines Ende zu einem Ende der Strahlungselektrode hin verläuft, wobei der IC-Chip den Schlitz überspannt und auf jeder Seite des Schlipses ein jeweiliger Anschluss des IC-Chips mit der Strahlungselektrode verbunden ist, und
das Dielektrikum ein flexibles Dielektrikum ist.

2. IC-Tag nach Anspruch 1, wobei die Antenne eine zweiseitige Richtungscharakteristik aufweist.

3. IC-Tag nach Anspruch 1, wobei die Strahlungselektrode und die Masseelektrode im Wesentlichen die gleiche Größe aufweisen.

4. IC-Tag nach Anspruch 1, wobei die Größe der Masseelektrode nicht mehr als das Zweifache der Größe der Strahlungselektrode beträgt.

5. IC-Tag nach einem der vorhergehenden Ansprüche, wobei das Dielektrikum ein Kunstharzschaum ist.

6. IC-Tag nach Anspruch 5, wobei der Kunstharzschaum Acryl, Synthetikkautschuk oder Polyethylen oder ein Verbundkörper daraus ist.

7. IC-Tag nach Anspruch 6, wobei das Schäumungsverhältnis des Kunstharzschaums null beträgt.

8. IC-Tag nach Anspruch 5, wobei die Form des Kunstharzschaums rechteckig, polygonal oder kreisförmig ist.

9. IC-Tag nach Anspruch 8, wobei das Dielektrikum ein Dünnfilmharz aufweist und die Strahlungselektrode und die Masseelektrode, durch Metall-Vakuumabscheidung mit dem Dünnfilmharz, als Dünnfilm ausgebildet sind.

10. IC-Tag nach einem der Ansprüche 1 bis 4, wobei das Dielektrikum Papier ist.

11. IC-Tag nach einem der Ansprüche 1 bis 4, mit einem Gehäuse (31) mit einem darin befindlichen Hohlraum, wobei die Strahlungselektrode und die Masseelektrode entsprechenderweise auf dem Deckel und dem Boden des Gehäuses angeordnet sind und das Dielektrikum von Luft zwischen der Strahlungselektrode und der Masseelektrode gebildet ist.

12. IC-Tag nach Anspruch 11, wobei die Strahlungselektrode Folgendes aufweist:
einen Leistungszuführabschnitt, an dem der IC-Chip angebracht ist, und
Strahlungsabschnitte auf beiden Seiten des Leistungszuführabschnitts, wobei die Strahlungselektrode im Wesentlichen eine H-Form aufweist, die am Leistungszuführabschnitt eingeschnürt ist und sich an den Strahlungsabschnitten erweitert.

13. IC-Tag nach Anspruch 12, wobei in der Strahlungselektrode, der Masseelektrode und dem Dielektrikum eine durch diese hindurchtretende Öffnung ausgebildet ist.

14. IC-Tag nach Anspruch 11, wobei die Strahlungselektrode einen Leistungszuführabschnitt, an dem der IC-Chip angebracht ist, und Strahlungsabschnitte auf beiden Seiten des Leistungszuführabschnitts aufweist, wobei die Strahlungselektrode am Leistungszuführabschnitt eingeschnürt ist, die Strahlungsabschnitte jeweils halbkreisförmig ausgebildet sind und der Leistungszuführabschnitt und die Strahlungsabschnitte einen Kreis bilden.

## Revendications

1. Étiquette IC à ondes radioélectriques équipée d'une antenne microruban incluant une électrode rayonnante (2, 12, 22, 32, 132a) sur laquelle une puce IC (3, 13, 23, 133a) est montée, une électrode de masse (4, 14 , 24, 34 , 134a) et un diélectrique (1, 11, 21, 131a) intercalé entre ladite électrode rayonnante et ladite électrode de masse,
**caractérisée en ce que**
l'électrode rayonnante a une fente en forme de L (3a), une extrémité de laquelle s'étend jusqu'à une extrémité de l'électrode rayonnante, la puce IC mettant en pont la fente et chaque borne de la puce IC étant connectée à l'électrode rayonnante sur l'un ou l'autre côté de la fente, et
le diélectrique est un diélectrique flexible.

2. Étiquette IC selon la revendication 1, dans laquelle ladite antenne a une directivité des deux côtés.

3. Étiquette IC selon la revendication 1, dans laquelle ladite électrode rayonnante et ladite électrode de masse ont sensiblement la même taille.

4. Étiquette IC selon la revendication 1, dans laquelle la taille de ladite électrode de masse n'est pas supérieure à deux fois la taille de ladite électrode rayonnante.

5. Étiquette IC selon l'une quelconque des revendications précédentes, dans laquelle ledit diélectrique est une mousse de résine synthétique.

6. Étiquette IC selon la revendication 5, dans laquelle ladite mousse de résine synthétique est constituée d'acrylique, de caoutchouc synthétique ou de polyéthylène, ou de leur corps composite.

7. Étiquette IC selon la revendication 6, dans lequel un taux de moussage de ladite mousse de résine synthétique est égal à zéro.

8. Étiquette IC selon la revendication 5, dans laquelle la forme de ladite mousse de résine synthétique est un rectangle, un polygone ou un cercle.

9. Étiquette IC selon la revendication 8, dans laquelle ledit diélectrique inclut une résine en film mince, et ladite électrode rayonnante et ladite électrode de masse sont mises en forme de film mince par dépôt métallique sous vide à travers ladite résine en film mince.

10. Étiquette IC selon l'une quelconque des revendications 1 à 4, dans laquelle ledit diélectrique est constitué de papier.

11. Étiquette IC selon l'une quelconque des revendications 1 à 4, comportant en outre un boîtier (31) ayant une cavité dans celui-ci, et ladite électrode rayonnante et ladite électrode de masse étant agencées sur le couvercle et la partie inférieure dudit boîtier, respectivement, et ledit diélectrique étant matérialisé par de l'air entre ladite électrode rayonnante et ladite électrode de masse.

12. Étiquette IC selon la revendication 11, dans laquelle ladite électrode rayonnante a :
une partie d'alimentation en énergie sur laquelle ladite puce IC est montée, et
des parties rayonnantes existant sur les deux côtés de ladite partie d'alimentation en énergie, et ladite électrode rayonnante ayant généralement une forme de H qui est resserrée au niveau de ladite partie d'alimentation en énergie et s'élargit au niveau desdites parties rayonnantes.

13. Étiquette IC selon la revendication 12, dans laquelle une ouverture est formée dans ladite électrode rayonnante, ladite électrode de masse et ledit diélectrique de manière à pénétrer à travers eux.

14. Étiquette IC selon la revendication 11, dans laquelle ladite électrode rayonnante a une partie d'alimentation en énergie sur laquelle ladite puce IC est montée et des parties rayonnantes existant sur les deux côtés de ladite partie d'alimentation en énergie, ladite électrode de rayonnement étant resserrée au niveau de ladite partie d'alimentation en énergie, lesdites parties rayonnantes étant mises en forme de demi-cercle, respectivement, et ladite partie d'alimentation en énergie et lesdites parties de rayonnement formant un cercle.
